# EUROPÄISCHE PATENTSCHRIFT

(11) **EP 3 835 532 B1**
(45) Veröffentlichungstag und Bekanntmachung des Hinweises auf die Patenterteilung: **09.07.2025**
(21) Anmeldenummer: 19214439.2
(22) Anmeldetag: 09.12.2019
(51) Int. Cl.: E05F 15/603, E05F 15/643, H02K 1/18, H02K 5/04, H02K 5/173, H02K 5/18, H02K 7/116, H02K 11/33

(54) **TÜRANTRIEB MIT EINER EINFACH AUFGEBAUTEN MOTOREINHEIT HOHER INTEGRATIONSDICHTE**
DOOR DRIVE WITH A SIMPLE DESIGN MOTOR UNIT HAVING HIGH INTEGRATION DENSITY
ENTRAINEMENT DE PORTE DOTÉ D'UNE UNITÉ MOTEUR D'UNE CONSTRUCTION SIMPLE À DENSITÉ D'INTÉGRATION ÉLEVÉE

(43) Veröffentlichungstag der Anmeldung: 16.06.2021
(73) Patentinhaber: dormakaba Deutschland GmbH, 58256 Ennepetal (DE)
(72) Erfinder: Finis, Dietmar, 58256 Ennepetal (DE); Wagner, Martin, 58256 Ennepetal (DE)
(74) Vertreter: Balder IP Law, S.L.

(56) Entgegenhaltungen:
- EP-A2- 2 395 638
- EP-A2- 2 757 219
- DE-A1- 10 024 021
- US-B2- 9 356 493

## Beschreibung

Die Erfindung betrifft einen Türantrieb zur Anordnung an oder in Verbindung mit einer Türanlage, mit dem zumindest ein Flügelelement der Türanlage bewegbar ist, aufweisend eine Motoreinheit mit einem Gehäuse, in dem ein Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung bringbar ist. Weiterhin betrifft die Erfindung eine Türanlage mit einem solchen Türantrieb, aufweisend wenigstens ein Flügelelement, mit dem der Türantrieb antreibend in Wirkverbindung steht.

Aus der DE 10 2008 046 062 A1 ist ein Türantrieb zur Anordnung an einer Türanlage bekannt, und der Antrieb dient zur Bewegung von Flügelelementen der Türanlage, die als automatische Schiebetür ausgebildet ist. Der Türantrieb weist hierfür eine Motoreinheit mit einem Gehäuse auf, und an das Gehäuse der Motoreinheit ist eine Getriebeeinheit angebracht, die als Schneckenradgetriebe ausgeführt ist. Damit ist die Motoreinheit als schnelldrehender Motor konzipiert, und mit der Getriebeeinheit wird die höhere Drehzahl des Rotors der Motoreinheit reduziert auf eine geringere Drehzahl zum Antrieb einer Riemenscheibe, die auf eine Abtriebswelle der Getriebeeinheit aufgesetzt ist.

Über die Riemenscheibe wird ein Zahnriemen gelegt, der mit den Flügelelementen der automatischen Schiebetür verbunden wird. Da die Motoreinheit schnelldrehend ausgelegt ist, und die Drehzahl auf die Riemenscheibe reduziert werden muss, ist in Verbindung mit dem Motor die Getriebeeinheit notwendig, wodurch zusätzlicher Bauraum erforderlich wird, und wodurch die Konstruktion des Türantriebs komplexer wird. Die räumliche Dimensionierung des Türantriebs muss an die Notwendigkeit der Getriebeeinheit angepasst werden, und da der Motor eine zylinderförmige Grundform aufweist, nimmt dieser einen Bauraum ein, der in Bezug auf seine Einbauumgebung keine optimale Raumnutzung ermöglicht. Gleiches gilt für ein Schneckenradgetriebe, das insbesondere in Verbindung mit dem Motor sehr bauraumintensiv ist.

Einen weiteren Türantrieb offenbart die DE 10 2014 115 932 A1, und der Türantrieb weist als Grundkörper einen einteiligen quaderförmigen Körper auf, in den Aussparungen zu der Aufnahme einer Motoreinheit und einer Getriebestufe eingebracht sind. Zur weiteren Aufnahme einer Steuerung, einem Netzteil und dergleichen sind in dem Block weitere Aussparungen und Öffnungen vorgesehen. Der quaderförmige Körper bildet also ein Gehäuse als Träger der einzelnen Komponenten des Türantriebes und ist über der gesamten Abmessung des Antriebes einteilig und gewissermaßen monolithisch ausgeführt. EP 2 757 219 A2 offenbart ebenso ein Beispiel eines Türantriebs.

Grundsätzlich wird bei der Konstruktion von Türantrieben zur Anordnung an oder zur Anordnung in Verbindung mit einer Türanlage das Ziel verfolgt, den Türantrieb möglichst kompakt und mit kleinen Abmessungen auszuführen, beispielsweise indem eine Getriebeeinheit oder eine Getriebestufe innerhalb des Türantriebs bereits vermieden wird. Türantriebe werden üblicherweise oberhalb der linear bewegbaren Flügelelemente einer automatischen Schiebetüranlage angeordnet und weisen ein Trägerprofil auf, das einen Grundkörper der Türanlage bildet und am Trägerprofil werden der Türantrieb integriert montiert und gleichermaßen die Flügelelemente linear geführt. Als Verbindungsmittel zwischen dem Türantrieb und den Flügelelementen dient in der Regel ein Zahnriemen, wobei auch andere Zugmittel wie Kettenverbindungen und dergleichen möglich sind. Der Türantrieb bildet dabei mit wenigstens dem Motor, einem Netzteil und einer Steuerung eine eigene Baueinheit, die mit der Anordnung am Trägerprofil in die Türanlage integriert wird.

Um das Trägerprofil mit einer entsprechenden Blende, einem Gehäuse oder sonstigen Umbauteilen möglichst kleinbauend auszuführen, ist es von Vorteil, auch und insbesondere den Türantrieb selbst möglichst kompakt und mit kleinen Abmessungen auszuführen. Da jedoch Flügelelemente aus Glas große Massen erreichen können, muss der Türantrieb eine hohe Leistungsdichte aufweisen, um derartige Flügelelemente entsprechend stark beschleunigen und auch wieder verzögern zu können, damit die Türanlage auch mit großen Flügelelementen noch eine angemessene Dynamik erreicht.

Für eine hohe Leistungsdichte und insbesondere einen geräuscharmen Betrieb bieten sich Motoreinheiten in Verbindung mit einem Zahnriemen als Direktantriebe an, bei denen auf der Abtriebswelle der Motoreinheit unmittelbar die Riemenscheibe aufgebracht wird, über die der Zahnriemen gelegt wird, der wiederum unmittelbar mit den Flügelelementen in Verbindung steht. Dadurch kann der Türantrieb geräuschminimal betrieben werden, da keine hohen Motordrehzahlen erreicht werden, und bei entsprechender Auslegung der Motoreinheit können Leistungsdichten bereitgestellt werden, die hinreichend sind, um Flügelelemente von beispielsweise 200kg bis 250kg für den Betrieb einer automatischen Schiebetür hinreichend stark zu beschleunigen und auch wieder zu verzögern.

Motor-Getriebeeinheiten mit einer zylinderförmigen Motoraußenform und einem quer dazu liegenden Schneckenradgetriebe ermöglichen keine besonders hohe Integrationsdichte, insbesondere in Bezug auf die bereitstellbare Ausgangsleistung an der Abtriebswelle. Ferner gestaltet sich die weitere kompakte Anordnung eines Netzteiles, einer Steuerung und beispielsweise eines Bedienteils unter Einhaltung einer hohen Integrationsdichte als schwierig.

Aufgabe der Erfindung ist die Schaffung eines Türantriebs mit einer Motoreinheit, die eine hohe Integrationsdichte und eine hohe Leistungsdichte aufweist, und wobei der Motor in Verbindung mit dem wenigstens einen Flügelelement insbesondere als Direktantrieb ausgeführt sein soll, wobei eine einfache und leicht zu montierende Motoreinheit geschaffen werden soll. Der Motor soll insbesondere als Innenläufer ausgeführt sein und nach dem Prinzip eines Torquemotors funktionieren.

Diese Aufgabe wird ausgehend von einem Türantrieb gemäß Anspruch 1 und ausgehend von einer Türanlage gemäß Anspruch 12 mit den jeweils kennzeichnenden Merkmalen gelöst. Vorteilhafte Weiterbildungen der Erfindung sind in den abhängigen Ansprüchen und in der Beschreibung angegeben.

Die Erfindung schließt die technische Lehre ein, dass das Gehäuse aus zwei miteinander verbundenen Gehäusehälften ausgebildet ist, wobei der Stator mit ersten Befestigungselementen innenliegend in einer ersten Gehäusehälfte haltend angeordnet ist und wobei zweite Befestigungselemente vorgesehen sind, mit denen die zweite Gehäusehälfte an der ersten Gehäusehälfte angeordnet ist.

Kerngedanke der Erfindung ist ein einfacher Grundaufbau der Motoreinheit mit Gehäusehälften, die halbschalenförmig ausgeführt sein können, und werden die Gehäusehälften miteinander verbunden, vervollständigt sich der so gebildete Grundkörper der Motoreinheit. Die Gehäusehälften müssen dabei nicht zwingend eine exakte Hälfte des Gehäuses bilden, und die Teilungsebene zwischen den Gehäusehälften muss nicht aus einer halben Höhe einer Höhenkante des Gehäuses liegen. Insofern können auch Gehäusehälften im Sinne der Erfindung vorgesehen sein, die unterschiedlich bemaßt, gestaltet und dimensioniert sind, diese können jedoch in einer Weise aufeinander gebracht und verbunden werden, dass ein Quader zur Bildung des Gehäuses entsteht, und so die Grundform der Motoreinheit gebildet wird. Bevorzugt sind zwei Gehäusehälften vorgesehen.

Innerhalb der Motoreinheit sind zwischen den Gehäusehälften erfindungsgemäß der Stator und auch der Rotor aufgenommen, und dann, wenn die Gehäusehälften schalenartig ausgeführt sind, können diese unmittelbar oder mittelbar miteinander verbunden werden. Werden die Gehäusehälften unmittelbar miteinander verbunden, so wird ein umlaufender etwa rechteckförmiger Rand der jeweiligen Gehäusehälfte direkt aufeinander gefügt, wobei bei einer mittelbaren Verbindung der Gehäusehälften miteinander auch ein Zwischenelement zwischen den Gehäusehälften angeordnet sein kann, beispielsweise ein Dichtelement oder dergleichen.

Im Sinne der Erfindung ist insbesondere nicht vorgesehen, dass der Stator mit seinem Blechlamellenpaket ein Zwischenabschnitt zwischen den Gehäusehälften bildet, der nach dem Fügen der beiden Gehäusehälften auf einem vollen Umfang noch einen Teil der Außenhaut der Motoreinheit bildet. Die Gehäusehälften werden insofern auf eine Weise miteinander verbunden, die eher der direkten Verbindung dient, sodass die beiden Gehäusehälften sich berühren, ungeachtet des Vorhandenseins einer Dichtung oder dergleichen.

Der Stator weist eine ringförmige Grundstruktur auf, und innerhalb der Ringform ist der Rotor drehbeweglich über die Abtriebswelle aufgenommen. Da der Rotor insbesondere über beide Gehäusehälften aufgenommen ist, wird für den Zusammenbau der Motoreinheit der Stator zunächst in einer ersten Gehäusehälfte mit ersten Befestigungselementen innenliegend befestigt, und anschließend wird nach Einfügen des Rotors die zweite Gehäusehälfte an die erste Gehäusehälfte gefügt. Mit diesem Grundprinzip des Aufbaus der Motoreinheit entsteht eine einfache Montage aus insgesamt wenig Montageschritten, und Maßabweichungen in der Herstellung des Stators können beim Fügen der Gehäusehälften aufeinander außer Acht bleiben, was insbesondere dann von Vorteil ist, wenn die Rotorwelle über zwei zugeordnete Lagerelemente in den jeweiligen Gehäusehälften drehbar aufgenommen ist. Die Einpassung des Stators muss allenfalls noch an die erste Gehäusehälfte angepasst werden, ohne dass die zweite Gehäusehälfte mit dem Stator gemeinsame Befestigungsmittel aufweisen würde.

Mit besonderem Vorteil weist die Motoreinheit die Grundform eines Quaders auf. Ein Quader im Sinne der vorliegenden Erfindung ist ein Körper, der von sechs Rechteckflächen begrenzt wird, wobei die Rechteckflächen im Wesentlichen, aber nicht vollständig, plan sein sollten, also durchaus Anformungen, Wölbungen, Schrägungen, Rippen und dergleichen aufweisen können. Insofern ist im Sinne der Erfindung die Quaderform der Motoreinheit allenfalls annähernd mathematisch zu verstehen, ein Rechtecckörper mit leichten Winkelabweichungen und Formabweichungen fällt damit auch noch unter dem Begriff des Quaders.

Da die Grundform der Motoreinheit selbst den Quader bilden soll, kann diese auch als eine Hüllform verstanden werden, ohne dass das Gehäuse der Motoreinheit eine exakte quaderförmige Hüllform abbildet. Damit ist klargestellt, dass die Motoreinheit keine standardmäßig zylinderförmige Grundform aufweisen soll, beispielsweise mit zwei Lagerschilden, zwischen denen der nach außen freie Stator eingefasst ist und die Lagerschilde wären mit Zugankern miteinander verbunden. Diese Bauform des Motors ist erfindungsgemäß gerade eben nicht vorgesehen.

Somit ist gemäß der Ausgestaltung der Motoreinheit im Rahmen der Erfindung möglich, mit der Quaderform auf vorteilhafte Weise einen Türantrieb zu schaffen, bei dem weitere Komponenten wie etwa ein Netzteil oder eine Steuerung unter optimaler Bauraumausnutzung an das rechteckige Gehäuse des Motors angebracht werden können. Insbesondere die Quaderform des Gehäuses der Motoreinheit begünstigt die Anordnung des Stators in einer ersten Gehäusehälfte und die Anordnung der zweiten Gehäusehälfte an der ersten Gehäusehälfte, da die Montage des Stators in der ersten Gehäusehälfte nicht toleranzbehaftet ist, und die zweite Gehäusehälfte ohne Berücksichtigung des Stators an der ersten Gehäusehälfte angeordnet werden kann.

Durch die runde Grundform des Stators und die Quaderform des Gehäuses der Motoreinheit stehen Eckbereiche, in denen die Befestigungselemente zwischen den Gehäusehälften, jedoch auch weitere Befestigungselemente, die notwendig sind für die Anbindung von Flanschen und dergleichen, auf vorteilhafte Weise integriert werden können.

Die Gehäusehälften weisen nach einer weiteren Ausführungsform nach innen gestülpte Lageraufnahmeabschnitte auf, in denen Lagerelemente eingebracht sind, über die die Abtriebswelle gelagert ist. Der Rotor kann hierfür im Halbschnitt eine H-Form aufweisen, sodass innerhalb eines Trägerkörpers des Rotors radial umlaufende Aufnahmebereiche gebildet werden, in denen sich die Lageraufnahmeabschnitte mit den eingebrachten Lagerelementen hinein erstrecken können. Dadurch entsteht eine hohe Integrationsdichte des Aufbaus der Motoreinheit.

Die Gehäusehälften sind mit weiterem Vorteil über zueinander zugeordnete Grenzflächen in aneinander anliegender Weise miteinander geschraubt, wobei die Befestigungselemente mittels Schraubelementen gebildet sind. Weiterhin besteht die Möglichkeit, den Stator in oder an der ersten Gehäusehälfte mittels Schraubelementen zu befestigen. Die Schraubelemente zwischen den Gehäusehälften und die Schraubelemente zur Befestigung des Stators in der ersten Gehäusehälfte können zur noch besseren Bauraumnutzung in den Eckbereichen des Quaders integriert sein.

Der Quader weist mit weiterem Vorteil eine Längskante, eine Breitenkante und eine Höhenkante auf, wobei die Längskante größer ist als die Breitenkante und wobei die Breitenkante größer ist als die Höhenkante. Beispielsweise weist die Breitenkante eine Länge von 70 % bis 98 %, insbesondere von 85 % bis 95 % von der Länge der Längskante auf. Die Höhenkante kann eine Länge von 30 % bis 60 %, insbesondere von 40 % bis 50 % von der Länge der Längskante aufweisen. Beträgt die Länge der Längskante beispielsweise 100 mm, so weist die Breitenkante eine Länge von beispielsweise 90 mm auf, und die Höhenkante weist eine Länge von beispielsweise 40 mm bis 50 mm auf.

Die Längskante und die Breitenkante können eine Stirnfläche aufspannen, wobei die Abtriebswelle aus der Stirnfläche hervorsteht, und wobei auf dem Abschnitt der Abtriebswelle, die senkrecht aus der Stirnfläche hervorsteht, eine Riemenscheibe aufgebracht sein kann. Die Stirnfläche der Motoreinheit ist vorteilhafterweise plan ausgeführt, sodass sich die Riemenscheibe bis kurz vor die Planfläche der Stirnfläche erstrecken kann.

Die erste Gehäusehälfte und/oder die zweite Gehäusehälfte weist einen innenliegenden Aufnahmeabschnitt auf, in dem der Stator eingebracht ist. Dabei können die Gehäusehälften halbschalenförmig ausgeführt sein.

Zwischen einer Außenseite des Stators und einer Innenseite des Aufnahmeabschnittes ist damit ein wenigstens teilweise umlaufender Wärmeübergangsspalt gebildet. Der Wärmeübergangsspalt ist, um als solcher zur Wärmeübergabe vom Stator in die zumindest eine oder in beide Gehäusehälften zu dienen, mit Werten von beispielsweise zwischen -0,05 mm bis 0,1 mm ausgelegt, sodass eine Übergangspassung zwischen dem Stator und dem Aufnahmebereich des Stators in der Gehäusehälfte oder in beiden Gehäusehälften gebildet ist. Wärme, die im Stator durch den Betrieb der Motoreinheit entsteht, kann auf vorteilhafte Weise an die Gehäusehälften übergeben und über diese an die Umgebung abgegeben werden.

Mit weiterem Vorteil weist der Stator ein Blechlamellenpaket auf, das die Außenseite des Stators und damit eine Grenzfläche des Wärmeübergangsspalts bildet. Damit kann der Stator noch besser entwärmt werden, indem die Wärme direkt vom Blechlamellenpaket in die Gehäusehälften übergeht.

Der Stator weist einen Wicklungsträger aus einem Kunststoff auf, wobei der Wicklungsträger mit einer Teilfläche seitlich des Blechlamellenpaketes im Kraftschluss der Verschraubung mittels der ersten Befestigungselemente des Stators mit der ersten Gehäusehälfte angeordnet ist. Mit dem Kunststoff-Wicklungsträger innerhalb des Kraftschlusses in der Verschraubung des Stators mit der ersten Gehäusehälfte entsteht ein Nachgiebigkeitsbereich, der thermische Spannungen bei einer Erwärmung der Motoreinheit minimiert.

Der Stator kann außerhalb des Kraftflusses der Verschraubung der ersten Gehäusehälfte mit der zweiten Gehäusehälfte mittels der zweiten Befestigungselemente liegen. Zwischen den Gehäusehälften ist beispielsweise ein Dichtelement oder dergleichen eingebracht, oder die Gehäusehälften werden unmittelbar plan miteinander verschraubt.

Durch die einseitige Verbindung des Stators mit dem Gehäuse kann auf einfache Weise der weitere Vorteil erreicht werden, dass das Gehäuse zumindest eine fensterartige Aussparung aufweist, in die ein Flächenabschnitt des Stators hineinragt. Die Oberfläche des Flächenabschnittes kann mit der außenseitigen Fläche des Gehäuses mit der in diese eingebrachten Aussparung bündig in einer gemeinsamen Ebene abschließen. Insbesondere können in zwei sich beispielsweise gegenüberliegenden der vorderseitigen und rückseitigen Flächen jeweilige fensterförmige Aussparungen eingebracht sein, in die ein jeweiliger Flächenabschnitt des Stators hineinragt. Dadurch wird auf einfache Weise die Möglichkeit geschaffen, den Stator trotz eines im Wesentlichen geschlossenen Gehäuses mit einem weiteren Körper in einen wärmeübertragenden Kontakt zu bringen, um den Stator effektiv zu entwärmen. Die fensterartige Aussparung weist eine Fläche auf, die nur einen kleinen prozentualen Teil der gesamten Oberfläche des Gehäuses der Motoreinheit ausmacht, beispielweise 2% bis 20% und bevorzugt 5% bis 15%.

Die Erfindung betrifft weiterhin eine Türanlage mit einem Türantrieb mit den vorstehend beschriebenen Merkmalen. Die Türanlage kann ein Verbindungselement zum Verbinden mit einem Flügelelement aufweisen. Zusätzlich oder alternativ kann die Türanlage wenigstens ein Flügelelement, mit dem der Türantrieb antreibend in Wirkverbindung steht, aufweisen.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene des Trägerprofils laufen. Der Riemen kann zwischen Riemenscheiben der Türanlage gespannt sein. Eine der Riemenscheiben kann als die Riemenscheibe des erfindungsgemäßen Türantriebs ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs mit einer Motoreinheit,
- Fig. 2: eine perspektivische Ansicht der Motoreinheit,
- Fig. 3: eine perspektivische Ansicht der Motoreinheit gemäß Fig. 2, wobei eine Gehäusehälfte in der Ansicht entfernt wurde,
- Fig. 4: ein Halbschnitt der Motoreinheit und
- Fig. 5: eine perspektivische Ansicht des Stators.

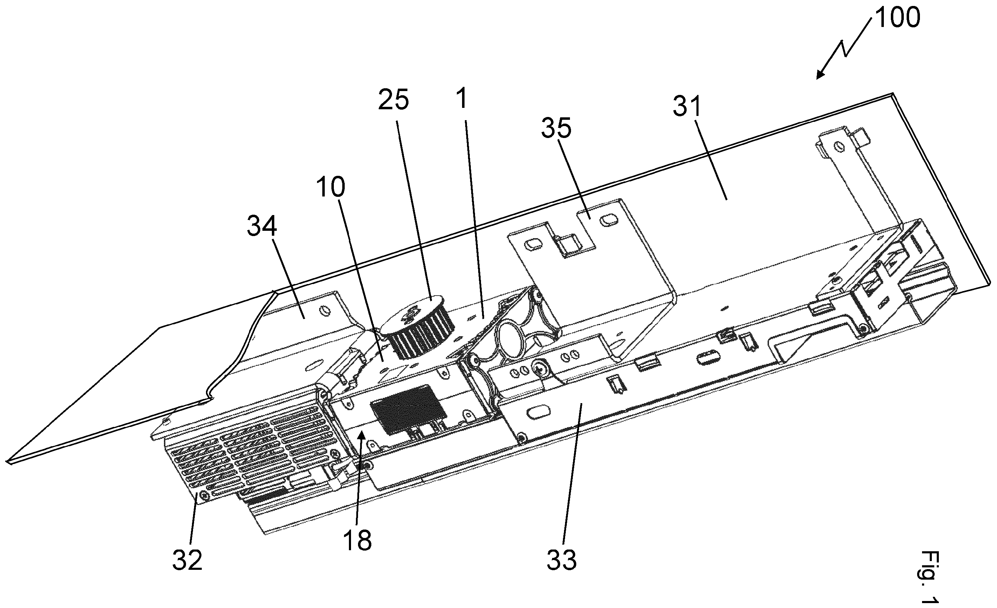

Fig. 1 zeigt eine Gesamtansicht des Türantriebs 100, wie dieser in einem Gebäude installiert werden kann, womit auch die Installation auf Schiffen und in Flugzeugen umfasst sein soll, und ein Türantrieb 100 dieser Art dient beispielsweise als Antrieb für eine automatische Schiebetüranlage.

Die Grundstruktur des Türantriebs 100 bildet ein Trägerprofil 31, welches zur einfacheren Ansicht verkürzt dargestellt ist, zudem ist der wesentliche obere Teil des L-förmigen Trägerprofils 31 aufgeschnitten gezeigt, um die weiteren vorliegend wesentlichen Komponenten des Türantriebs 100 sichtbar zu machen.

Als zentraler Bestandteil weist der Türantrieb 100 eine Motoreinheit 1 auf, und die Motoreinheit 1 besitzt die Grundform eines Quaders 18, der das Gehäuse 10 der Motoreinheit 1 bildet. Um einen Abtrieb und damit eine Verbindung zu einem nicht näher dargestellten Flügelelement einer Türanlage zu ermöglichen, ist an der Motoreinheit 1 eine Riemenscheibe 25 angeordnet, über die ein Zahnriemen gelegt werden kann, mit dem schließlich die Verbindung zu dem oder den Flügelelementen, beispiels-weise den Glasschiebeelementen, hergestellt wird.

Benachbart zur Motoreinheit 1 weist der Türantrieb 100 ein Netzteil 32 und eine Steuerung 33 auf, und das Netzteil 32 und die Steuerung 33 sind an sich gegenüberliegenden Seiten der Motoreinheit 1 angeordnet. Die Motoreinheit 1 ist mit einem ersten Flanschelement 34 am Trägerprofil 31 befestigt, wobei das erste Flanschelement 34 zugleich das Netzteil 32 mit aufnimmt. Weiterhin ist die Motoreinheit 1 mit einem zweiten Flanschelement 35 mit dem Trägerprofil 31 verbunden, wobei das zweite Flanschelement 35 zugleich die Steuerung 33 aufnimmt. Alternativ ist auch die Ausführung eines einzigen Flansches möglich, um wenigstens die Motoreinheit 1, das Netzteil 32 und die Steuerung 33 aufzunehmen, ferner besteht die Möglichkeit, dass die Motoreinheit, das Netzteil 32 und/oder die Steuerung 33 jeweils zugeordnete separate Flanschelemente zur Anordnung im oder am Trägerprofil 31 aufweisen.

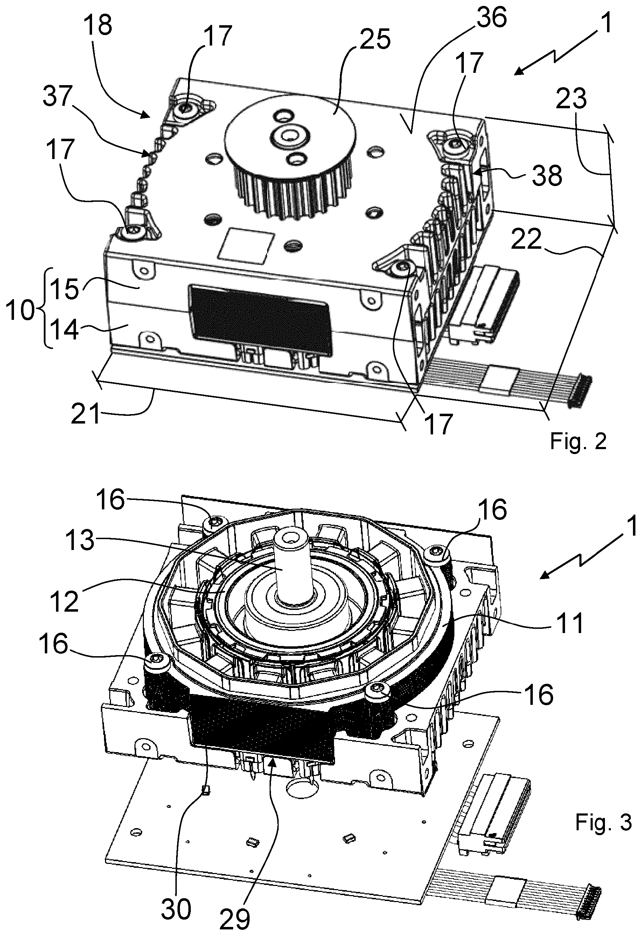

Fig. 2 zeigt eine perspektivische Ansicht der vereinzelten Motoreinheit 1 mit dem Gehäuse 10, und außerhalb des Gehäuses 10 befindet sich in der Darstellung oberseitig die Riemenscheibe 25 zur Ankopplung eines Zahnriemens oberhalb der plan und frei von Befestigungsmitteln ausgeführten Stirnfläche 36 des Gehäuses 10.

Das Gehäuse 10 der Motoreinheit 1 weist eine erste untere Gehäusehälfte 14 und eine zweite obere Gehäusehälfte 15 auf, die beispielhaft gleichartig ausgeführt sind, im Rahmen der Erfindung aber nicht gleichartig ausgeführt sein müssen. Seitlich ist das Gehäuse 10 begrenzt durch eine erste Seitenfläche 37 und eine gegenüberliegende zweite Seitenfläche 38, und an den Seitenflächen 37 und 38 können die Flanschelemente 34 und 35 angeordnet werden, die in Fig. 1 gezeigt sind.

Der mit dem Gehäuse 10 gebildete Quader 14 weist Eckbereiche auf, in den Schraubbohrungen zur Befestigung der Flanschelemente 34, 35 mittels Schraubelementen eingebracht sind. Weiterhin befinden sich in den Eckbereichen die Befestigungselemente 17 zur Verschraubung der Gehäusehälften 14 und 15 miteinander.

Der Quader 18 ist bestimmt durch die Längskante 21, die Breitenkante 22 und die Höhenkante 23, wobei die Seitenflächen 23, 24 aufgespannt werden durch die Breitenkante 18 und die Höhenkante 19.

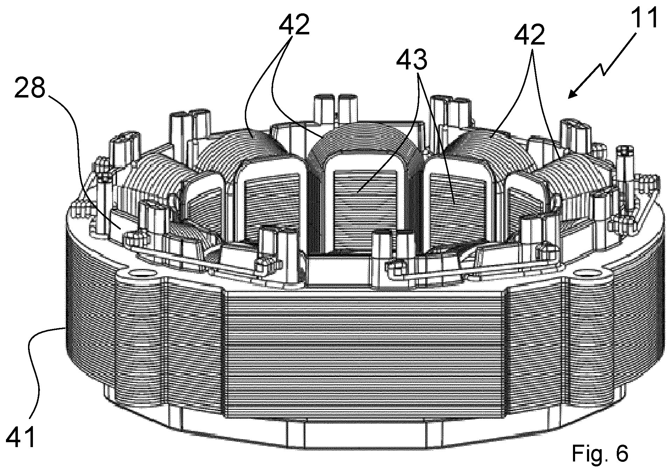

Die vorderseitige Fläche, die durch die Längskante 21 und die Höhenkante 23 aufgespannt wird, weist eine fensterförmige Aussparung 29 auf, aus der ein Flächenabschnitt 30 des in der Ansicht nicht dargestellten Stators herausragt, wobei in Zusammenhang mit dem Stator 11 auf Fig. 6 hingewiesen wird. Der nach außen weisende Flächenabschnitt 30 des Stators 11 dient zum wärmeübertragenden Kontakt mit einem weiteren Körper, beispielsweise mit dem Trägerprofil 31 oder mit einem weiteren, separaten Kühlkörper. Dadurch kann trotz des im Wesentlichen geschlossen ausgeführten Gehäuses 10 mit der unteren und oberen Gehäusehälfte 14, 15 der Stator 11 in direkten wärmeübertragenden Kontakt mit einem Motorumbauteil gebracht werden.

Der Stator 11 gemäß der Darstellung in Fig. 3 ist mit der unteren Gehäusehälfte 14 mit der Schraubanordnung 16 verschraubt, und auf der Vorderseite sowie auf der Rückseite des Stators 11 befinden sich in gegenüberliegender Anordnung jeweilige Flächenabschnitte 30, die wie obenstehend beschrieben einen Flächenabschnitt der Außenhaut der Motoreinheit 1 bilden.

Durch die entnommene zweite Gehäusehälfte 15 ist der Stator 11 mit dem innerhalb des Stators 11 angeordneten Rotor 12 gezeigt, wobei der Rotor 12 einheitlich ausgebildet ist mit der Abtriebswelle 13, die aus der oberen Gehäusehälfte herausgeführt ist, und der sich aus der Stirnfläche 36 des Gehäuses 10 heraus erstreckende Teil der Abtriebswelle 13 nimmt die Riemenscheibe 25 auf.

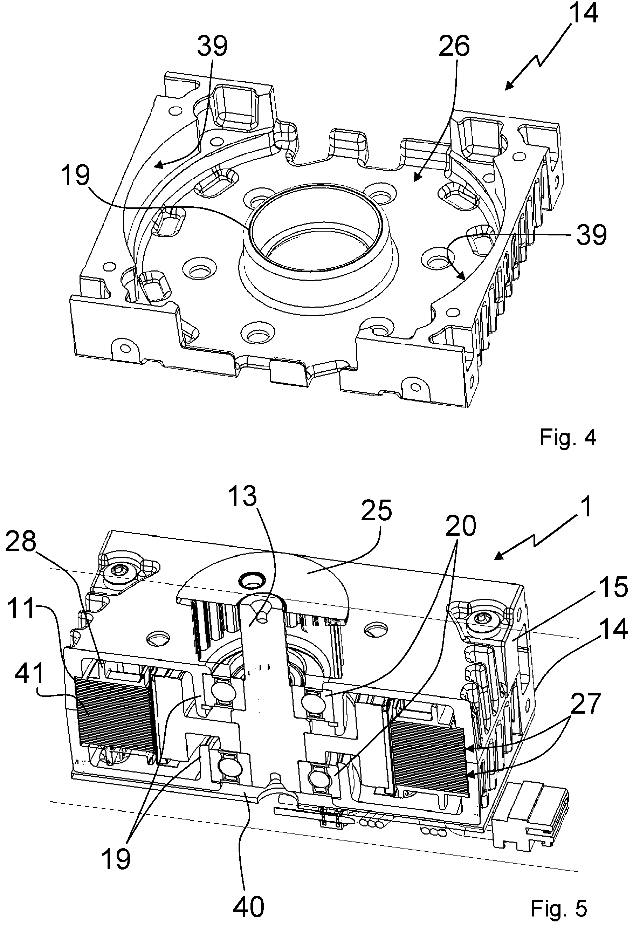

Fig. 4 zeigt eine perspektivische Ansicht der ersten, unteren Gehäusehälfte 14, innerhalb der ein Aufnahmeabschnitt 26 gezeigt ist, der sich um einen Lageraufnahmeabschnitt 19 herum erstreckt. Damit ist der Aufnahmeabschnitt 26 etwa ringförmig umlaufend ausgeführt und außenseitig ist der Aufnahmeabschnitt 26 zur Aufnahme des Stators mit einer Innenseite 39 begrenzt, mit der die Außenfläche des Stators 11 den Wärmeübergangsspalt bildet.

In Fig. 5 ist in einer geschnittenen Darstellung der Motoreinheit 1 der Stator 11 innerhalb der Gehäusehälften 14, 15 angeordnet gezeigt, und es ist der Wärmeübergangsspalt 27 angedeutet. Der Wärmeübergangsspalt 27 läuft mit Unterbrechungen um die Ausführungen des ringförmigen Stators 11 herum, sodass Wärme, die beim Betrieb der Motoreinheit 1 im Stator 11 entsteht, in die Gehäusehälften 14, 15 übergehen kann.

Die Lagerung des Rotors 12 ist gezeigt mit zwei Lagerelementen 20, die in jeweiligen Lageraufnahmeabschnitten 19 aufgenommen sind. Auf dem freien Ende der Abtriebswelle 13 ist eine Riemenscheibe 25 aufgebracht. Unterseitig von der ersten Gehäusehälfte 14 befindet sich eine Leiterkarte 40, die zur kabellosen Kontaktierung der nicht näher gezeigten Wicklungen auf den Stator 11 dient. Der Stator 11 weist ein Blechlamellenpaket 41 auf, das mit dem Wicklungsträger 28 umhüllt ist.

Eine perspektivische Ansicht eines solchen Stators 11 zeigt Fig. 6. Der Stator 11 weist zwölf Spulen 42 auf, die auf jeweiligen nach innen weisenden Zähnen 43 aufgewickelt sind. Auf dem Außenumfang des ringförmigen Blechlamellenpaketes 41 befinden sich Schraubendurchgänge 44, durch die hindurch die Befestigungselemente 16 geführt werden, um den Stator 11 mit der unteren, ersten Gehäusehälfte 14 zu verschrauben, siehe hierzu Fig. 3.

Die Erfindung beschränkt sich in ihrer Ausführung nicht auf das vorstehend angegebene bevorzugte Ausführungsbeispiel. Vielmehr ist, innerhalb des Umfangs der Ansprüche, eine Anzahl von Varianten denkbar, welche von der dargestellten Lösung auch bei grundsätzlich anders gearteten Ausführungen Gebrauch macht.

### Bezugszeichenliste

- 100: Türantrieb

- 1: Motoreinheit

- 10: Gehäuse
- 11: Stator
- 12: Rotor
- 13: Abtriebswelle
- 14: erste Gehäusehälfte
- 15: zweite Gehäusehälfte
- 16: Befestigungselement
- 17: Befestigungselement
- 18: Quader
- 19: Lageraufnahmeabschnitt
- 20: Lagerelement
- 21: Längskante
- 22: Breitenkante
- 23: Höhenkante
- 24: Stirnfläche
- 25: Riemenscheine
- 26: Aufnahmeabschnitt
- 27: Wärmeübergangsspalt
- 28: Wicklungsträger
- 29: fensterartige Aussparung
- 30: Flächenabschnitt
- 31: Trägerprofil
- 32: Netzteil
- 33: Steuerung
- 34: erstes Flanschelement
- 35: zweites Flanschelement
- 36: Stirnfläche
- 37: erste Seitenfläche
- 38: zweite Seitenfläche
- 39: Innenseite
- 40: Leiterkarte
- 41: Blechlamellenpaket
- 42: Spule
- 43: Zahn
- 44: Schraubendurchgang

## Patentansprüche

1. Türantrieb (100) zur Anordnung an oder in Verbindung mit einer Türanlage, mit dem zumindest ein Flügelelement der Türanlage bewegbar ist, aufweisend eine Motoreinheit (1) mit einem Gehäuse (10), in dem ein Stator (11) ruhend aufgenommen ist und wobei ein Rotor (12) drehbeweglich im Gehäuse (10) angeordnet ist, wobei der Stator (11) eine ringförmige Grundstruktur aufweist, und innerhalb der Ringform der Rotor (12) drehbeweglich über eine Abtriebswelle (13) aufgenommen ist, wobei die Abtriebswelle (13) mit dem Flügelelement antreibend in Wirkverbindung bringbar ist,
**dadurch gekennzeichnet, dass** das Gehäuse (10) aus miteinander verbundenen Gehäusehälften (14, 15) ausgebildet ist, wobei die erste Gehäusehälfte (14) und/oder die zweite Gehäusehälfte (15) einen innen liegenden Aufnahmeabschnitt (26) aufweist, in den der Stator (11) eingebracht ist, wobei der Stator (11) mit ersten Befestigungselementen (16) innenliegend in einer ersten Gehäusehälfte (14) haltend angeordnet ist und wobei zweite Befestigungselemente (17) vorgesehen sind, mit denen die zweite Gehäusehälfte (15) an der ersten Gehäusehälfte (14) angeordnet ist, und wobei zwischen einer Außenseite des Stators (11) und einer Innenseite des Aufnahmeabschnittes (26) ein wenigstens teilweise umlaufender Wärmeübergangsspalt (27) gebildet ist, um als solcher zur Wärmeübergabe vom Stator (11) in die zumindest eine oder in beide Gehäusehälften (14, 15) zu dienen.

2. Türantrieb (100) nach Anspruch 1, **dadurch gekennzeichnet, dass** die Motoreinheit (1) die Grundform eines Quaders (18) aufweist.

3. Türantrieb (100) nach Anspruch 1 oder 2, **dadurch gekennzeichnet, dass** die Gehäusehälften (14, 15) nach innen gestülpte Lageraufnahmeabschnitte (19) aufweisen, in denen Lagerelemente (20) eingebracht sind, über die die Abtriebswelle (13) gelagert ist.

4. Türantrieb (100) nach einem der Ansprüche 1 bis 3, **dadurch gekennzeichnet, dass** die Gehäusehälften (14, 15) über zueinander zugewandte Grenzflächen aneinander anliegend miteinander verschraubt sind, wobei die Befestigungselemente (17) mittels Schraubelementen gebildet sind.

5. Türantrieb (100) nach einem der Ansprüche 2 bis 4, **dadurch gekennzeichnet, dass** der Quader (14) eine Längskante (21), eine Breitenkante (22) und eine Höhenkante (23) aufweist, wobei die Längskante (21) größer ist als die Breitenkante (22) und/oder wobei die Breitenkante (22) größer ist als die Höhenkante (23).

6. Türantrieb (100) nach Anspruch 5, **dadurch gekennzeichnet, dass** die Längskante (21) und die Breitenkante (22) eine Stirnfläche (36) aufspannen, wobei die Abtriebswelle (13) aus der Stirnfläche (36) hervorsteht und/oder wobei auf dem Abschnitt der Abtriebswelle (13), die senkrecht aus der Stirnfläche (36) hervorsteht, eine Riemenscheibe (25) aufgebracht ist, wobei die Stirnfläche (24) der Motoreinheit (1) plan ausgeführt ist und sich die Riemenscheibe (25) bis vor die Planfläche der Stirnfläche (24) erstreckt.

7. Türantrieb (100) nach Anspruch 6, **dadurch gekennzeichnet, dass** der Wärmeübergangsspalt (27) ein Spaltmaß von -0,1mm bis 0,5mm und/oder von -0,05mm bis 0,2mm und/oder von -0,05mm bis 0,1mm aufweist.

8. Türantrieb (100) nach Anspruch 6 oder 7, **dadurch gekennzeichnet, dass** der Stator (11) ein Blechlamellenpaket aufweist, das die Außenseite des Stators (11) bildet und eine Grenzfläche des Wärmeübergangsspaltes (27) bildet.

9. Türantrieb (100) nach einem der vorgenannten Ansprüche, **dadurch gekennzeichnet, dass** der Stator (11) einen Wicklungsträger (28) aus einem Kunststoff aufweist, wobei der Wicklungsträger (28) mit einer Teilfläche im Kraftfluss der Verschraubung mittels der ersten Befestigungselemente (16) des Stators (11) mit der ersten Gehäusehälfte (14) angeordnet ist.

10. Türantrieb (100) nach einem der vorgenannten Ansprüche, **dadurch gekennzeichnet, dass** der Stator (11) außerhalb des Kraftflusses der Verschraubung der ersten Gehäusehälfte (14) mit der zweiten Gehäusehälfte (15) mittels der zweiten Befestigungselemente (17) liegt.

11. Türantrieb (100) nach einem der vorgenannten Ansprüche, **dadurch gekennzeichnet, dass** das Gehäuse (10) zumindest eine fensterartige Aussparung (29) aufweist, in die ein Flächenabschnitt (30) des Stators (11) hineinragt.

12. Türanlage mit einem Türantrieb (100) gemäß einem der vorgenannten Ansprüche, aufweisend wenigstens ein Verbindungselement zum Verbinden mit einem Flügelelement und/oder wenigstens ein Flügelelement, mit dem der Türantrieb (100) antreibend in Wirkverbindung steht.

## Claims

1. A door drive (100) for arrangement on or in connection with a door system, with which at least one leaf element of the door system can be moved, having a motor unit (1) with a housing (10), in which a stator (11) is received in a stationary manner and wherein a rotor (12) is arranged in the housing (10) so as to be rotationally movable, wherein the stator (11) has an annular basic structure, and the rotor (12) is received within the annular shape so as to be rotationally movable via an output shaft (13), wherein the output shaft (13) can be brought into operative connection in a driving manner with the leaf element,
**characterised in that** the housing (10) is formed from interconnected housing halves (14, 15), wherein the first housing half (14) and/or the second housing half (15) has an internal receiving section (26) into which the stator (11) is inserted, wherein the stator (11) is arranged in a retained manner with first fastening elements (16) inside of a first housing half (14) and wherein second fastening elements (17) are provided, with which the second housing half (15) is arranged on the first housing half (14), and wherein an at least partially circumferential heat transfer gap (27) is formed between an outer side of the stator (11) and an inner side of the receiving section (26) in order to serve as such for heat transfer from the stator (11) into the at least one or into both housing halves (14, 15).

2. The door drive (100) according to claim 1, **characterised in that** the motor unit (1) has the basic shape of a cuboid (18).

3. The door drive (100) according to claim 1 or 2, **characterised in that** the housing halves (14, 15) have inwardly inverted bearing receiving sections (19), in which bearing elements (20) are inserted, via which the output shaft (13) is supported.

4. The door drive (100) according to one of claims 1 to 3, **characterised in that** the housing halves (14, 15) are screwed together so as to bear against one another via boundary surfaces facing each other, wherein the fastening elements (17) are formed by means of screw elements.

5. The door drive (100) according to one of claims 2 to 4, **characterised in that** the cuboid (14) has a longitudinal edge (21), a width edge (22) and a height edge (23), wherein the longitudinal edge (21) is larger than the width edge (22) and/or wherein the width edge (22) is larger than the height edge (23).

6. The door drive (100) according to claim 5, **characterised in that** the longitudinal edge (21) and the width edge (22) span an end face (36), wherein the output shaft (13) projects from the end face (36) and/or wherein a belt pulley (25) is attached to the section of the output shaft (13) which projects perpendicularly from the end face (36), wherein the end face (24) of the motor unit (1) is designed to be planar and the belt pulley (25) extends up to in front of the planar face of the end face (24).

7. The door drive (100) according to claim 6, **characterised in that** the heat transfer gap (27) has a gap dimension of -0.1 mm to 0.5 mm and/or of -0.05 mm to 0.2 mm and/or of -0.05 mm to 0.1 mm.

8. The door drive (100) according to claim 6 or 7, **characterised in that** the stator (11) has a package of sheet metal laminations which forms the outer side of the stator (11) and forms a boundary surface of the heat transfer gap (27).

9. The door drive (100) according to one of the preceding claims, **characterised in that** the stator (11) has a winding carrier (28) of a plastic, wherein the winding carrier (28) is arranged with a partial surface in the force flow of the screw connection by means of the first fastening elements (16) of the stator (11) to the first housing half (14).

10. The door drive (100) according to one of the preceding claims, **characterised in that** the stator (11) lies outside the force flow of the screw connection of the first housing half (14) to the second housing half (15) by means of the second fastening elements (17).

11. The door drive (100) according to one of the preceding claims, **characterised in that** the housing (10) has at least one window-like recess (29) into which a surface section (30) of the stator (11) projects.

12. A door system with a door drive (100) according to one of the preceding claims, having at least one connection element for connecting to a leaf element and/or at least one leaf element with which the door drive (100) is operatively connected in a driving manner.

## Revendications

1. Entraînement de porte (100) destiné à être agencé sur ou en liaison avec une installation de porte, avec lequel au moins un élément de vantail de l'installation de porte peut être déplacé, présentant une unité moteur (1) comportant un boîtier (10), dans lequel un stator (11) est logé au repos et dans lequel un rotor (12) est agencé de manière à pouvoir se déplacer en rotation dans le boîtier (10), dans lequel le stator (11) présente une structure de base de forme annulaire, et à l'intérieur de la forme annulaire, le rotor (12) est logé de manière à pouvoir se déplacer en rotation par l'intermédiaire d'un arbre de sortie (13), dans lequel l'arbre de sortie (13) peut être mis en liaison active avec l'élément de vantail par entraînement,
**caractérisé en ce que** le boîtier (10) est réalisé à partir de moitiés de boîtier (14, 15) reliées entre elles, dans lequel la première moitié de boîtier (14) et/ou la seconde moitié de boîtier (15) présentent une section de logement (26) située à l'intérieur, dans laquelle le stator (11) est inséré, dans lequel le stator (11) est agencé en étant maintenu par des premiers éléments de fixation (16) situés à l'intérieur dans une première moitié de boîtier (14) et dans lequel des seconds éléments de fixation (17) sont prévus, avec lesquelles la seconde moitié de boîtier (15) est agencée sur la première moitié de boîtier (14), et dans lequel une fente de transfert de chaleur (27) au moins partiellement périphérique est formée entre un côté extérieur du stator (11) et un côté intérieur de la section de logement (26), pour servir en tant que telle au transfert de chaleur du stator (11) dans l'au moins une ou dans les deux moitiés de boîtier (14, 15).

2. Entraînement de porte (100) selon la revendication 1, **caractérisé en ce que** l'unité moteur (1) présente la forme de base d'un parallélépipède (18).

3. Entraînement de porte (100) selon la revendication 1 ou 2, **caractérisé en ce que** les moitiés de boîtier (14, 15) présentent des sections de logement de palier (19) retournées vers l'intérieur, dans lesquelles des éléments de palier (20) sont insérés, par l'intermédiaire desquels l'arbre de sortie (13) est monté.

4. Entraînement de porte (100) selon l'une des revendications 1 à 3, **caractérisé en ce que** les moitiés de boîtier (14, 15) sont vissées l'une à l'autre en étant en contact l'une avec l'autre par l'intermédiaire de surfaces limites tournées l'une vers l'autre, dans lequel les éléments de fixation (17) sont formés par le biais d'éléments de vis.

5. Entraînement de porte (100) selon l'une des revendications 2 à 4, **caractérisé en ce que** le parallélépipède (14) présente une arête en longueur (21), une arête en largeur (22) et une arête en hauteur (23), dans lequel l'arête en longueur (21) est plus grande que l'arête en largeur (22) et/ou dans lequel l'arête en largeur (22) est plus grande que l'arête en hauteur (23).

6. Entraînement de porte (100) selon la revendication 5, **caractérisé en ce que** l'arête en longueur (21) et l'arête en largeur (22) définissent une surface frontale (36), dans lequel l'arbre de sortie (13) fait saillie de la surface frontale (36) et/ou dans lequel sur la section de l'arbre de sortie (13), qui fait saillie verticalement de la face frontale (36), une poulie à courroie (25) est appliquée, dans lequel la surface frontale (24) de l'unité moteur (1) est exécutée de manière plane et la poulie à courroie (25) s'étend jusqu'à l'avant de la surface plane de la surface frontale (24).

7. Entraînement de porte (100) selon la revendication 6, **caractérisé en ce que** la fente de transfert de chaleur (27) présente une dimension de fente de - 0,1 mm à 0,5 mm et/ou de -0,05 mm à 0,2 mm et/ou de -0,05 mm à 0,1 mm.

8. Entraînement de porte (100) selon la revendication 6 ou 7, **caractérisé en ce que** le stator (11) présente un paquet de lamelles de tôle, qui forme le côté extérieur du stator (11) et forme une interface de la fente de transfert de chaleur (27).

9. Entraînement de porte (100) selon l'une des revendications précédentes, **caractérisé en ce que** le stator (11) présente un support d'enroulement (28) en une matière plastique, dans lequel le support d'enroulement (28) est agencé avec une surface partielle dans le flux de force du vissage par le biais des premiers éléments de fixation (16) du stator (11) avec la première moitié de boîtier (14).

10. Entraînement de porte (100) selon l'une des revendications précédentes, **caractérisé en ce que** le stator (11) se trouve en dehors du flux de force du vissage de la première moitié de boîtier (14) avec la seconde moitié de boîtier (15) par le biais des seconds éléments de fixation (17).

11. Entraînement de porte (100) selon l'une des revendications précédentes, **caractérisé en ce que** le boîtier (10) présente au moins un évidement (29) de type fenêtre, dans lequel une section de surface (30) du stator (11) fait saillie.

12. Installation de porte comportant un entraînement de porte (100) selon l'une des revendications précédentes, présentant au moins un élément de liaison pour la liaison avec un élément de vantail et/ou au moins un élément de vantail, avec lequel l'entraînement de porte (100) est en liaison active par entraînement.
